# EUROPEAN PATENT APPLICATION

(11) **EP 4 527 661 A1**
(43) Date of publication of application: **26.03.2025**
(21) Application number: 23198591.2
(22) Date of filing: 20.09.2023
(51) Int. Cl.: B60K 35/10, B60K 35/60, B60K 35/65, G06F 3/01

(54) **METHOD AND APPARATUS FOR DETECTING AN INPUT OF A USER OF A VEHICLE**

(71) Applicant: Bayerische Motoren Werke Aktiengesellschaft, 80809 München (DE)
(72) Inventor: Zaidan, Sherif, 80797 München (DE); Knop, Michel, 86444 Affing (DE); Kreuzpaintner, David, 81829 München (DE)

(57) **Abstract**

The invention relates to a method, in particular a computer-implemented method, for detecting an input of a user, in particular a driver, of a vehicle, comprising: (i) Determining a position of a reference-surface regarding an image sensor, which are located inside the vehicle; (ii) detecting a first hand of the user at a first position on the reference-surface by the image sensor; (iii) detecting a movement of the first hand from the first position to a second position on the reference-surface by the image sensor; (iv) determining a function of the vehicle based on the detected movement; (v) initiating the function by a control unit.

## Description

The present invention relates to a, in particular computer-implemented, method and an apparatus, for detecting an input of a user of a vehicle.

In modern vehicles, at least one control unit is usually installed, via which the driver of the vehicle or other passengers can control various functions. These functions can be various vehicle or comfort functions, such as settings for the navigation system, air conditioning, seat settings, lighting settings and the like. Various functions of an infotainment system can also be controlled, such as playing music, making phone calls and the like.

Conventional control units can be operated via corresponding control buttons. Modern vehicles comprise at least a display, which can be located centrally in the dashboard, for example. The individual functions, menus and the like can be displayed here. These displays are often touch-sensitive, so that the desired function can be controlled by touching the screen. For this purpose, the control elements are designed in such a way that they can be reached and operated by touching the surface of the display with one or more fingers. A function can be initiated when the corresponding area of the touch-sensitive screen is touched. Other means of control may also be provided, such as holding and dragging a control element, swiping gestures and the like. By using two fingers zooming in and zooming out of a content is possible. However, such touch-sensitive displays need to be accessible by a user's hand in order to control a function by touch.

In vehicles, it is also known to control certain functions by free hand gestures. To do this, a user performs certain predefined gestures in free space, for example in a spatial area of the vehicle cabin above the centre console or in front of the dashboard. Gestures in free space requires a monitoring of the gesture in three dimensions which requires substantial computational resources.

It is an object of the present invention enable the detection of an input of a user of a vehicle which is improved regarding the described disadvantages.

A solution to this problem is provided by the teaching of the independent claims. Various preferred embodiments of the present invention are provided by the teachings of the dependent claims.

A **first aspect** of the solution is directed to a method, in particular a computer-implemented method, for detecting an input of a user, in particular a driver, of a vehicle, comprising: (i) Determining a position of a reference-surface regarding an image-sensor, which are located inside the vehicle; (ii) detecting a first hand of the user at a first position on the reference-surface by the image sensor; (iii) detecting a movement of the first hand from the first position to a second position on the reference-surface by the image sensor; (iv) determining a function of the vehicle based on the detected movement; (v) initiating the function by a control unit.

Where the term "comprising" or "including" is used in the present description and claims, it does not exclude other elements or steps. Where an indefinite or definite article is used when referring to a singular noun e.g. "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "one" as used herein are defined in the sense of "one or more". The terms "another" and "a further" and any other variant thereof are to be understood in the sense of "at least one more".

The term "plural" as used herein shall be understood in the sense of "two or more".

The term "configured" or "set up" to perform a certain function (and respective variations thereof) as used herein shall be understood as meaning that the corresponding device is already present in a configuration or setting in which it can perform the function or that it is at least adjustable - i.e. configurable - in such a way that it can perform the function after corresponding adjustment. In this context, the configuration can be carried out, for example, by means of a corresponding setting of parameters of a process sequence or of switches or the like for activating or deactivating functionalities or settings. In particular, the device can have several predetermined configurations or operating modes, so that the configuration can be performed by means of a selection of one of these configurations or operating modes.

The term "vehicle" as used herein specifically refers to a passenger car, including all types of motor vehicles, hybrid and battery electric vehicles, and vehicles such as sedans, vans, buses, trucks, vans and the like.

The term "image sensor" as used here refers to an image sensor, in particular an image sensor of a camera, that is capable of sensing a scene. In particular, the image sensor can have an electro-optical sensor that is designed to detect or measure electromagnetic signals, which are also referred to as image signals in the following and convert them into electrical signals. These sensors can be a charge-coupled device (CCD), a radar sensor, a lidar sensor, or any other sensor. In addition, such a sensor can also be designed to emit electromagnetic signals to an object and to detect the electromagnetic signals reflected back from this object, so that in a subsequent evaluation information about the object can be obtained from the emitted and the reflected-back electromagnetic signals. Such sensors are used in so-called TOF (Time-of-Flight) cameras.

Accordingly, the method of the first aspect can enable to initiate a function based on a movement of a first hand of the user regarding a reference-surface. The position of a reference-surface can be determined by reading it out from a database of the control unit in which positions of objects inside the vehicle are stored. The movement on the reference-surface occurs in two dimensions. Detecting such a movement and determining the function based on this movement requires less computational resources compared to an analysis of a gesture in three dimensions. This also means that the detection can be more accurate. Further the movement of the first hand is guided by the reference-surface. In case the user is the driver, this enables more safety, because the user has a reference to relate to.

In the following, certain preferred embodiments of the method will be described, which can be arbitrarily combined with each other or with other aspects of the present solution, unless such combination is explicitly excluded or technically impossible.

In some embodiments, a movement of one of the fingers of the first hand from the first position to the second position is detected. This enables initiating a function based on little movement, because there is no need for the first hand to move completely when one of its fingers is moved. In case of a driver, being the user this enables that the driver can keep his hands on the steering wheel with only a minor movement of a finger. This enables a save driving.

In some embodiments the method further comprises: (i) Detecting a second hand of the user at a third position regarding the reference-surface by the image sensor; (ii) detecting a movement of the second hand from the third position to a fourth position regarding the reference-surface by the image sensor; (iii) determining a relative movement of the first hand to the second hand regarding the reference-surface; (iv) wherein the function is determined by using the determined relative movement. This enables a function by a relative movement of the first hand to the second hand. Such a movement might be possible when both hands are moving at a surface of a steering wheel of the vehicle, or when the vehicle is not moving. Thereby a more complex function can be initiated is possible, such as turning or moving of graphical contents of a display to each other. Another function could be a zooming-function for such graphical content.

In some embodiments the method further comprises: (i) determining a distance between the first hand and the second hand while a movement of the first hand and the second hand occurs, (ii) wherein the function is determined by using the dependence on the determined distance. This enables a function depending on whether the first hand and second hand move towards each other or move away from each other. This can enable a function of graphical content of a display wherein graphical contents are moved towards each other or are moved away from each other.

In some embodiments the method further comprises: (i) detecting a first arm relating to the first hand and/or detecting a second arm relating to the second hand and their corresponding movements by the image sensor; (ii) verifying the movement of the first arm in relation to the movement of the first hand and/or verifying the movement of the second arm in relation to the movement of the second hand; (iii) initiating the function if at least one of the verifications results such that the movement of the first arm in relation to the movement of the first hand and/or the movement of the second arm in relation to the movement of the second hand are consistent. This can ensure that function to be initiated can be verified. A case where the movements of the first hand and the first arm are consistent can be that both move in the same direction. In case the verification results such that the first hand moves in a different direction in relation to the first arm, this will result in an inconsistent result, and the function will not be initiated. Overall, the verification can enable that a function if correctly initiated, and otherwise is not initiated. Thereby accidental initiations of functions can be avoided.

In some embodiments the function comprises an adaption of a graphical content of a display by the control unit. This enables an adaption of such a graphical content by a movement of a hand of the user regarding the reference-surface but without the need to contact or touch the display itself by a hand of the user.

In some embodiments the reference-surface comprises a surface of a steering wheel of the vehicle. This enables the driver to keep his hands on the steering wheel while providing the input. This enables more safety during driving the vehicle.

In some embodiments a map of reference objects and their positions relative to each other and relative to the reference-surface of the inside of the vehicle is stored in the control unit, and wherein the reference-surface and its position are determined by using the map of references. This can enable a more accurate detection of the positions and movements of the first hand and the second hand as well as a more accurate detection of the position of the reference-surface. As a result, the initiated function which is based on the movements can be operated more accurately.

A **second aspect** of the solution is directed to an apparatus being configured to perform the method of the first aspect.

In some embodiments the apparatus comprises: (i) A control unit which is configured to determine a position of a reference-surface regarding an image-sensor, which are located inside the vehicle; (ii) an image sensor which is configured to detect a first hand of a user of the vehicle at a first position on the reference-surface; (iii) wherein the image sensor is configured to detect a movement of the first hand from the first position to a second position on the reference-surface; (iv) wherein the control unit is configured to determine a function of the vehicle based on the detected movement; (v) and wherein the control unit is further configured to initiate the function.

A third aspect of the present solution is directed to a computer-program with instructions for causing the apparatus of the second aspect to perform the steps of the method of the first aspect.

In particular, the computer-program may be stored on a non-volatile medium. Preferably, this is a data carrier in the form of an optical data carrier or a flash memory module. This may be advantageous if the computer program as such is to be traded independently of a processor platform on which the one or more programs are to be executed. In another implementation, the computer program may be present as a file on a data processing unit, particularly a server, and downloadable via a data connection, such as the Internet or a dedicated data connection, such as a proprietary or local area network. In addition, the computer program may have a plurality of interacting individual program modules.

The various embodiments and advantages described above in connection with the first aspect similarly apply to the other aspects.

Further advantages, features and applications are provided in the following detailed description of preferred embodiments and the appended figures, wherein:
**Fig. 1** schematically illustrates a flowchart of an exemplary method;
**Fig. 3** schematically illustrates a vehicle with an exemplary apparatus; and
**Figs. 3A to 3C** schematically illustrates exemplary movements of hands of a driver at a steering wheel.

In the figures, identical reference signs are used for the same or mutually corresponding elements.

### DETAILED DESCRIPTION OF EMBODIMENTS

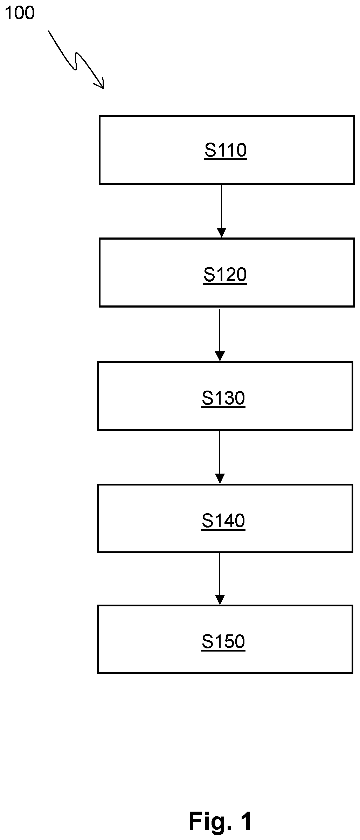

**Figure 1** schematically illustrates a flowchart 100 of an exemplary method for detecting an input of a driver 260 of a vehicle 200.

A first step S110 of the method comprises determining a position of a surface 250 of a steering wheel 240 regarding an image sensor 230 of a camera, which are located inside the vehicle 200.

A further step S120 of the method comprises detecting a first hand 300 of the driver 260 at a starting position 320 on the surface 250 by the image sensor 230.

A further step S130 of the method comprises detecting a movement of the first hand 300 from the starting position 320 to an end position 330 on the surface 250 by the image sensor 230.

A further step S140 of the method comprises determining a function of the vehicle 200 based on the detected movement. Such a function can be a zooming-function for enlarging or shrinking a graphical content of a display 210.

A further step S150 of the method comprises initiating the function by a control unit 220 of the vehicle 200.

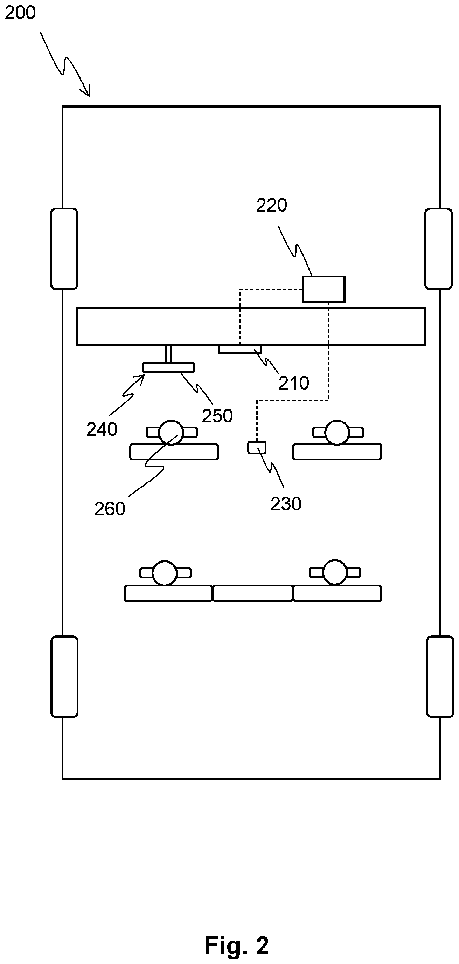

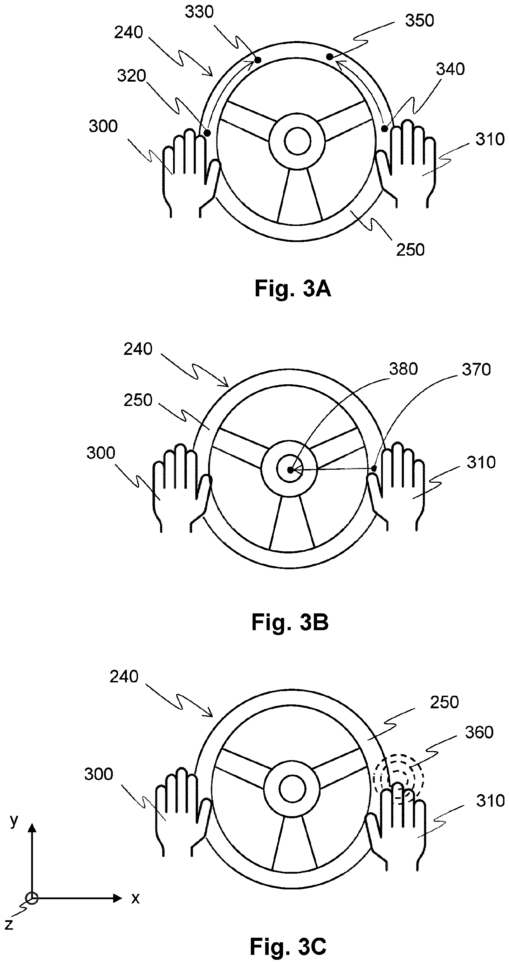

**Figure 2** schematically illustrates a vehicle 200 with an exemplary apparatus. The apparatus comprises a camera with an image sensor 230, which is arranged around the area of the vehicle headlining (not shown here). The image sensor 230 is configured to detect images of the arms but in particular the left hand 300 and the right hand 310 (see also Figures 3A to 3C) of a driver 260 of the vehicle 200. Thereby the image sensor 230 detects the positions of the hands 300, 310 and their corresponding movements from one position 320 to another position on a surface 250 of a steering wheel 240.

A control unit 220 is arranged at the vehicle 200. The control unit 220 is configured to evaluate the detected images of the camera 230. Thereby the control unit is configured to evaluate the movements of the left hand 300 and the right hand 310 from a corresponding starting position 320, 340, 370 to an end positions 330, 350, 380.

A memory (not shown here) of the control unit 220 comprises a map of the interior of the vehicle 200, wherein the map comprises reference objects of the interior of the vehicle and their relative positions to each other. These include the steering wheel 250 and its surface 250 and their positions in particular regarding the position of the image sensor 230.

This map can then be used by the control unit 220 for determining the current positions of the hands 300, 310 of the driver 260 and the steering wheel 240 and its surface 250.

The control unit 220 is further connected to a display 210 of the vehicle 200. The display 200 is configured to display graphical contents, such as a map or a navigation route on the map. The control unit 220 is configured to adapt the graphical contents of the display 220 corresponding to the movement of one of the hands 300, 310 or of both hands 300, 310 regarding the surface 250 of the steering wheel 240.

Exemplary movements of the left hand 300 and the right hand 310 of the driver are shown in Figures 3A to 3C.

**Figures 3A to 3C** schematically illustrate exemplary movements of hands 300, 310 of a driver 260 at a steering wheel 240 of the vehicle 200.

**Figure 3A** shows a left hand 300 at a starting position 320 and a right hand 310 at a starting position 340. The left hand 300 moves then to a final position 330 and the right hand 310 moves to a final position 350. This is indicated by the arrows. During these movements the left hand 300 and the right hand 310 move along the outer circumference of the steering wheel 240 towards each other. Likewise, movements of the left hand 300 and the right hand 310 in the opposite direction are possible. This means the movement of the left hand 300 starts at the position 330 and the movement of the right hand starts at the position 350.

By such movements a zoom-function at the display 210 can be initiated by the control unit 220. For example, when the left hand 300 and the right hand 310 move towards each other along the circumference of the steering wheel 240, as shown in Figure 3A, this can lead to a shrinking of a graphical content. In the other case when the left hand 300 and the right hand move away from each other, this can lead to an enlargement of the displayed graphical content at the display 210.

**Figure 3B** shows in contrast to Figure 3A only a movement of the right hand 310 of the driver 260 from a radially outward position 370 of the steering wheel 240 towards a position at the centre 380 of the steering wheel 240 in x-direction according to the schematically shown coordinate system. Such a movement can cause a shift of the graphical content along the x-direction. Likewise, the left hand 300 or the right hand 310 can move along the y-direction to cause a shift of the graphical content in the y-direction (not shown here).

**Figure 3C** shows a movement of one finger, for example the middle finger, of the right hand 310 in z-direction, such as a tap or double-tap 360. This is illustrated with the dashed circles. By such a detected tap-movement the control unit 220 can initiate a selection or de-selection function at the display 220.

While above at least one exemplary embodiment has been described, it has to be noted that a great number of variations thereto exists. Furthermore, it is appreciated that the described exemplary embodiments only illustrate non-limiting examples of how the present solution can be implemented and that it is not intended to limit the scope, the application or the configuration of the herein-described apparatus' and methods. Rather, the preceding description will provide the person skilled in the art with constructions for implementing at least one exemplary embodiment of the solution, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: Flowchart illustrating an exemplary method

- S110: Determining a position of a reference-surface
- S120: Detecting a first hand at a first position
- S130: Detecting a movement
- S140: Determining a function
- S150: Initiating the function

- 200: Vehicle
- 210: Display
- 220: Control unit
- 230: Image sensor
- 240: Steering wheel
- 250: Surface of steering wheel
- 260: Driver

- 300: Left hand of the driver
- 310: Right hand of the driver
- 320 to 380: Positions of hands / fingers

## Claims

1. A method for detecting an input of a user (260) of a vehicle (200) comprising the steps:
Determining a position of a reference-surface (250) regarding an image sensor (230), which are located inside the vehicle (200);
detecting a first hand (300) of the user (260) at a first position (320, 370) on the reference-surface (250) by the image sensor (230);
detecting a movement of the first hand (300) from the first position (320, 370) to a second position (330, 380) on the reference-surface (250) by the image sensor (230);
determining a function of the vehicle (200) based on the detected movement; initiating the function by a control unit (220) of the vehicle (200).

2. The method of claim 1, wherein the detection comprises a movement of one of the fingers of the first hand (300) from the first position (320) to the second position (330).

3. The method of claim 1 or 2, further comprising:
Detecting a second hand (310) of the user (260) at a third position (340) regarding the reference-surface (250) by the image sensor (230);
detecting a movement of the second hand (310) from the third position (340) to a fourth position (350) regarding the reference-surface (250) by the image sensor (230);
determining a relative movement of the first hand (300) to the second hand (310) regarding the reference-surface (250);
wherein the function is determined by using the determined relative movement.

4. The method of claim 3, further comprising, determining a distance between the first hand (300) and the second hand (310) while a movement of the first hand (300) and the second hand (310) occurs; wherein the function is determined by using the dependence on the determined distance.

5. The method of any of the preceding claims, further comprising:
detecting a first arm relating to the first hand (300) and/or detecting a second arm relating to the second hand (310) and their corresponding movements by the image sensor (230);
verifying the movement of the first arm in relation to the movement of the first hand (300) and/or verifying the movement of the second arm in relation to the movement of the second hand (310);
initiating the function if at least one of the verifications results such that the movement of the first arm in relation to the movement of the first hand (300) and/or the movement of the second arm in relation to the movement of the second hand (300) are consistent.

6. The method of any of the preceding claims, wherein the function comprises an adaption of a graphical content of a display (210) by the control unit (220).

7. The method of any of the preceding claims, wherein the reference-surface comprises a surface (250) of a steering wheel (240) of the vehicle.

8. The method of any of the preceding claims, wherein a map of reference objects and their positions relative to each other and relative to the reference-surface of the inside of the vehicle is stored in the control unit (220), and wherein the reference-surface (250) and its position are determined by using the map of references.

9. An apparatus which is configured to execute the method of any of the preceding claims.

10. The apparatus of claim 9, comprising:
A control unit (220) which is configured to determine a position of a reference-surface (250) regarding an image sensor (230), which are located inside the vehicle (200);
an image sensor (230) which is configured to detect a first hand (300) of a user (260) of the vehicle (200) at a first position (320, 370) on the reference-surface (250);
wherein the image sensor (230) is configured to detect a movement of the first hand (300) from the first position (320) to a second position (330, 380) on the reference-surface (250);
wherein the control unit (220) is configured to determine a function of the vehicle (200) based on the detected movement; and wherein the control unit (220) is further configured to initiate the function.

11. A Computer-program with instructions for causing the apparatus of claims 9 to 10 to perform the steps of the method of any one of claims 1 to 8.
